(19) Europäisches Patentamt
European Patent Office
Office européen des brevets

(11) **EP 3 280 626 B1**

(12) **EUROPÄISCHE PATENTSCHRIFT**

(45) Veröffentlichungstag und Bekanntmachung des Hinweises auf die Patenterteilung:
**19.10.2022  Patentblatt 2022/42**

(21) Anmeldenummer: **16716018.3**

(22) Anmeldetag: **06.04.2016**

(51) Internationale Patentklassifikation (IPC):
**B60W 50/08** (2020.01)  **B60W 30/18** (2012.01)
**B60R 11/00** (2006.01)  **B60W 50/14** (2020.01)

(52) Gemeinsame Patentklassifikation (CPC):
**B60L 7/18; B60L 7/26; B60W 20/19; B60W 50/082;
B62J 45/10; B62J 50/22;** B60K 2370/566;
B60L 2200/12; B60W 30/18072; B60W 30/18127;
B60W 2030/1809; B60W 2050/146;
B60W 2300/365; B60W 2510/244; B60W 2510/246;

(Forts.)

(86) Internationale Anmeldenummer:
**PCT/EP2016/057491**

(87) Internationale Veröffentlichungsnummer:
**WO 2016/162367 (13.10.2016 Gazette 2016/41)**

(54) **ELEKTRISCHER MOTORROLLER**

ELECTRICAL MOTOR SCOOTER

SCOOTER ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.04.2015  DE 102015105331**

(43) Veröffentlichungstag der Anmeldung:
**14.02.2018  Patentblatt 2018/07**

(73) Patentinhaber: **Ujet S.A.
3364 Leudelange (LU)**

(72) Erfinder: **DAVID, Patrick
89134 Blaustein (DE)**

(74) Vertreter: **Würmser, Julian
Meissner Bolte Patentanwälte
Rechtsanwälte Partnerschaft mbB
Postfach 86 06 24
81633 München (DE)**

(56) Entgegenhaltungen:
**EP-A1- 2 546 496        EP-A2- 2 853 435
DE-A1-102006 008 064    DE-A1-102011 113 226
JP-A- H10 169 425        US-A1- 2012 138 375**

(52) Gemeinsame Patentklassifikation (CPC): (Forts.)
B60W 2540/10; B60W 2540/103; B60Y 2200/126;
B62K 2202/00; B62K 2204/00; Y02T 10/60;
Y02T 10/72

**Beschreibung**

Die Erfindung betrifft einen elektrischen Motorroller.

Mit elektrischen Antrieben ausgestattete Motorroller sind bekannt. Rein exemplarisch wird auf die EP 1 857 314 A2 verwiesen. Entsprechende elektrische Motorroller oder motorisierte Zweiräder haben üblicherweise eine Karosserie und zwei Räder, wobei eines der Räder über einen elektrischen Antrieb angetrieben wird, der über eine Batterie gespeist wird.

Die effiziente Nutzung der in der elektrischen Batterie gespeicherten Energie bei hohem Fahrkomfort, der sich auch über die Dynamik des Fahrzeugs definiert, stellt eine große Herausforderung dar. Die Reichweite eines elektrischen Motorrollers wird maßgeblich dadurch bestimmt, wie effizient die vorhandene Energie genutzt werden kann. Des Weiteren wird für das Laden einer Batterie wesentlich mehr Zeit benötigt als für das Volltanken von mit einer Brennkraftmaschine betriebenen Motorrollern. Insofern soll ein elektrischer Motorroller nach Möglichkeit so selten wie möglich wiederaufgeladen werden müssen.

Des Weiteren ist für die sichere Bedienung eines elektrischen Motorrollers dessen Fahrverhalten entscheidend. Ein ungewolltes abruptes Abbremsen des Motorrollers ist daher zu vermeiden.

Ausgehend von diesem Stand der Technik ist es Aufgabe der vorliegenden Erfindung, einen elektrischen Motorroller bereitzustellen, der die in der Batterie gespeicherte Energie möglichst effizient nutzt.

Die Aufgabe wird durch einen elektrischen Motorroller gemäß dem Anspruch 1 gelöst.

Insbesondere wird die Aufgabe durch einen elektrischen Motorroller gelöst, der umfasst:

- mindestens einen elektrischen Antrieb;
- mindestens eine elektrische Batterie;
- mindestens eine Betätigungseinheit, die derart ausgebildet ist, dass die Betätigungseinheit entlang einer Betätigungsgesamtstrecke in sich unterscheidende Positionen bringbar ist;
- eine Steuerung, die dazu ausgebildet ist,

  ∘ die Position der Betätigungseinheit zu erfassen;
  ∘ in Abhängigkeit von der erfassten Position, aus einer Menge von Fahrmodi einen Fahrmodus auszuwählen und den ausgewählten Fahrmodus einzustellen, wobei die Fahrmodi umfassen:

    a) Rekuperationsmodus ("recuperation modus");
    b) Gleitmodus ("sailing modus");
    c) Beschleunigungsmodus,
    wobei die Steuerung beim Einstellen des Rekuperationsmodus den elektrischen Antrieb derart steuert, dass in dem elektrischen Antrieb erzeugte Energie zumindest teilweise an die Batterie abgegeben wird.

Ein wesentlicher Gedanke der vorliegenden Erfindung besteht darin, einen über die Betätigungseinheit, insbesondere einen Daumenhebel, abrufbaren Rekuperationsmodus bereitzustellen, bei dem kinetische Energie in elektrische Energie umgewandelt wird, so dass diese in der Batterie gespeichert werden kann. Diesbezüglich ist es wesentlich, dass der entsprechende Fahrmodus explizit von dem Fahrer angefordert werden kann, so dass kein ungewolltes Abbremsen des Fahrzeugs erfolgt.

In einer Ausführungsform kann neben dem Rekuperationsmodus ein Gleitmodus und ein Beschleunigungsmodus über die Betätigungseinheit eingestellt werden. Der Gleitmodus kann derart definiert sein, dass im Gleitmodus kein oder nur ein sehr geringes Drehmoment von dem elektrischen Antrieb aufgebracht wird. Der Beschleunigungsmodus kann derart definiert sein, dass dieser gegenüber dem Rekuperationsmodus ein positives Drehmoment seitens des elektrischen Antriebs bereitstellt.

Durch das Vorsehen des Rekuperationsmodus ist es also möglich, die Energie, die beim Bremsen normalerweise in Wärmeenergie verlorengeht, als elektrische Energie rückzugewinnen.

In einer Ausführungsform steuert die Steuerung den elektrischen Antrieb im Beschleunigungsmodus derart, dass eine im Wesentlichen lineare Abhängigkeit zwischen einer Position der Betätigungseinheit und dem durch den elektrischen Antrieb aufgebrachten Drehmoment besteht. Die Position kann anhand eines Distanzwerts von einer Ausgangsposition zur aktuellen Position angegeben werden. Ebenso kann die Position bei einer Betätigungseinheit, die sich im Wesentlichen kreisförmig um ein Zentrum bewegen lässt, anhand von einem Winkel angegeben werden. Zwischen der Position und dem aufgebrachten Drehmoment besteht in der besagten Ausführungsform eine lineare Beziehung. Diese lineare Beziehung kann beispielsweise durch die folgende Formel angegeben werden oder angenähert sein:

$$M(P)=k1*P+d,$$

wobei M(P) der Drehmoment der Position P, k1 ein erster Beschleunigungskoeffizient, P die Position, beispielsweise in Grad, und d eine Konstante ist. Die lineare Beziehung hat den Vorteil, dass eine sehr genaue Einstellung der Geschwindigkeit erfolgen kann. Des Weiteren stellt sich ein komfortables Fahrgefühl ein, wenn in entsprechender Weise beschleunigt wird.

Die Fahrmodi umfassen erfindungsgemäß einen Hochleistungsbeschleunigungsmodus ("boost modus"). Vorzugsweise steuert die Steuerung den Antrieb und/oder die Batterie im Hochleistungsbeschleunigungsmodus derart, dass zumindest abschnittsweise eine im Wesentlichen lineare Abhängigkeit zwischen einer Position der Betätigungseinheit und dem durch den elektrischen Antrieb aufgebrachten Drehmoment besteht. Vorzugsweise kann diese lineare Abhängigkeit mittels eines zweiten Beschleunigungskoeffizienten angegeben werden, wobei dieser zweite Beschleunigungskoeffizient größer ist als der bereits genannte erste Beschleunigungskoeffizient. In anderen Worten erfolgt vorzugsweise im Hochbeschleunigungsmodus eine schnellere Beschleunigung (mehr Drehmoment) als in dem "normalen" Beschleunigungsmodus.

Der Zusammenhang zwischen Drehmoment und Position kann durch folgende Formel ausgedrückt werden:

$$M(P)=k2*P+d2,$$

wobei k2 der zweite Beschleunigungskoeffizient und d2 eine zweite Konstante ist.

Der erste Beschleunigungskoeffizient kann (deutlich) kleiner als der zweite Beschleunigungskoeffizient sein (k1<k2 oder k1<<k2). Beispielsweise kann der erste Beschleunigungskoeffizient um mindestens 10, 20, 30, 40, 50 Prozent kleiner sein. Erfindungsgemäß kann der zweite Beschleunigungskoeffizient auch doppelt so groß wie der erste Beschleunigungskoeffizient sein.

Die Steuerung ist erfindungsgemäß dazu ausgebildet, Signale auszugeben, die angeben, ob sich der elektrische Antrieb und/oder die Batterie in einem Zustand befindet, in dem eine Hochleistungsbeschleunigung vorgenommen werden kann. Es ist denkbar, im Hochleistungsbeschleunigungsmodus eine Hochleistungsbeschleunigung anzubieten, die auf Dauer schädlich für den elektrischen Motorroller ist. Beispielsweise kann sich die Hochleistungsbeschleunigung über eine zulange Zeit schädlich auf die Batterie und/oder den Antrieb auswirken. Denkbar ist eine Überhitzung der Batterie auf Grund der schnellen Entladung. Um eine Schädigung des elektrischen Motorrollers zu vermeiden, kann die Steuerung Signale ausgeben, die es ermöglichen, diese kritische Situation zu vermeiden. Vorzugsweise handelt es sich hierbei um Signale, die angeben, ob eine Hochleistungsbeschleunigung vorgenommen werden kann.

Vorzugsweise erfolgt eine Ermittlung, ob eine entsprechende Hochleistungsbeschleunigung vorgenommen werden kann, anhand von Parametern, die die Steuerung sammelt. Vorzugsweise werden hierbei Parameter berücksichtigt, die von dem elektrischen Antrieb und/oder der Batterie stammen. In einer Ausführungsform werden bei der Ermittlung folgende Parameter berücksichtigt:

- Zeitraum seit einer letzten Hochleistungsbeschleunigung; und/oder
- Dauer der letzten Hochleistungsbeschleunigung; und/oder
- Temperaturwerte der Batterie und/oder des Antriebs.

Der Zeitraum seit der letzten Hochleistungsbeschleunigung und dessen Dauer kann, soweit die Steuerung über das entsprechende Verfahren Kontrolle hat, seitens der Steuerung selbst ermittelt werden. Temperaturwerte werden vorzugsweise über eine entsprechende Sensorik von der Batterie und/oder dem Antrieb geliefert. Erfind ist es auch möglich, Temperaturwerte unter Verwendung von Modellen abzuschätzen.

Eine entsprechend ausgebildete Steuerung kann helfen, zuverlässig eine Situation zu übermitteln, in der eine Hochleistungsbeschleunigung ohne Gefahr für den Motorroller durchgeführt werden kann.

Die Steuerung kann dazu ausgebildet sein, Signale auszugeben, die angeben, über welchen Zeitraum eine/die Hochleistungsbeschleunigung zur Verfügung steht. Vorzugsweise wird dieser Zeitraum auf einer Anzeige angezeigt. Erfindungsgemäß kann die Steuerung also dazu ausgebildet sein, die Bereitschaft zur Durchführung einer Hochleistungsbeschleunigung zu quantifizieren. Eine wichtige Quantifizierung kann darin bestehen, wie lange der Hochleistungsbeschleunigungsmodus zur Verfügung stehen wird. Es ist möglich, den Zeitraum, über welchen die Hochleistungsbeschleunigung zur Verfügung steht, in Zahlen anzugeben. Vorteilhaft für die Benutzung des erfindungsgemäßen Motorrollers ist es, wenn die Werte durch eine geeignete Symbolik angezeigt werden. Symbole lassen sich während der Fahrt leichter erkennen und einordnen. In einer Ausführungsform wird der Zeitraum unter Verwendung von Balken oder ähnlichen Symbolen angezeigt. Beispielsweise können mehrere Balken übereinander eine Säule ausbilden, die angibt, wie lange eine entsprechende Hochleistungsbeschleunigung zur Verfügung steht. Die Länge des Hochleistungsbeschleunigungsmodus kann auch durch den Füllzustand einzelner oder aller Balken angezeigt werden. Theoretisch ist es auch denkbar, prozentuale Angaben, beispielsweise in Form von Tortendiagrammen darzustellen. Sowohl bei der Visualisierung über Balken wie auch über Tortendiagramme ist es möglich, dass es für die Implementierung eine fest vorgegebene Maximallänge bezüglich des Abrufs der Hochleistungsbeschleunigung gibt. Diese Maximallänge kann beispielsweise kleiner oder gleich 3 Minuten oder kleiner oder gleich 2 Minuten oder kleiner oder gleich 90 Sekunden sein.

In einer Ausführungsform kann nach der Nutzung der Hochleistungsbeschleunigung der Zeitraum zur weiteren bzw. erneuten Nutzung der Hochleistungsbeschleunigung teilweise reduziert oder vollständig abgebaut sein. In dieser Situation baut sich der Zeitraum vorzugsweise wieder schrittweise auf und wird in entsprechender Weise visualisiert.

Der elektrische Roller, insbesondere die Betätigungseinheit, kann derart ausgebildet sein, dass:

- mindestens 10 Prozent, insbesondere mindestens 15 Prozent, der Betätigungsgesamtstrecke dem Rekuperationsmodus; und/oder
- mindestens 5 Prozent, insbesondere mindestens 10 Prozent, der Betätigungsgesamtstrecke dem Gleitmodus; und/oder
- mindestens 40 Prozent, insbesondere mindestens 50 Prozent der Betätigungsgesamtstrecke dem Beschleunigungsmodus; und/oder
- mindestens 3, insbesondere mindestens 5 Prozent der Betätigungsgesamtstrecke einem/dem Hochleistungsbeschleunigungsmodus zugeordnet sind.

Insofern stehen beispielsweise für den Rekuperationsmodus relativ lange Strecken zur Verfügung, die genutzt werden können, um die Rekuperation dosiert zu aktivieren. Da die Rekuperation üblicherweise zu einem Abbremsen des Fahrzeugs führt, kann ein schrittweises Aktivieren vorzugsweise über die dem Rekuperationsmodus zugeordnete Strecke die Sicherheit des Fahrzeugs erhöhen. Weiterhin können Ausrollstrecken beispielsweise vor einer Ampel besonders effizient genutzt werden, um Energie für die Batterie rückzugewinnen.

In einer Ausführungsform umfasst der elektrische Roller eine Smartphonehalterung, wobei die Smartphonehalterung aufweist:

- einen Schaumstoff zur Ablage des Smartphones; und
- eine drehbeweglich gelagerte zumindest abschnittsweise transparente Abdeckung, die in einer Verschlussstellung das Smartphone gegen den Schaumstoff presst.

Die Smartphonehalterung dient zur effizienten Halterung eines Smartphones am elektrischen Motorroller, vorzugsweise an dessen Lenkeinrichtung. Die Smartphonehalterung kann des Weiteren ein integriertes Display aufweisen, der von der Steuerung als Anzeige genutzt wird. Beispielsweise können auf dem Display die Symbole bezüglich der Verfügbarkeit und dem Zeitraum des Hochleistungsbeschleunigungsmodus bzw. der Hochleistungsbeschleunigung angezeigt werden. Die Smartphonehalterung kann als getrennte Erfindung betrachtet werden. In einer Ausführungsform stell sie aber das Gehäuse für zumindest einen Teil der beschriebenen Elektronik für die Steuerung bereit.

In einer Ausführungsform umfasst die Abdeckung einen oberen Flächenabschnitt und einen unteren Flächenabschnitt, wobei der obere Flächenabschnitt das integrierte Display schützt und der untere Flächenabschnitt das Smartphone hält. Sowohl der untere wie auch der obere Flächenabschnitt können zumindest teilweise transparent ausgebildet sein, so dass ein Ablesen des integrierten Displays und/oder des Displays des Smartphones möglich ist.

Vorzugsweise ist die Smartphonehalterung derart ausgebildet, dass das integrierte Display und das Smartphone in einer Position liegen, in der deren Oberflächen einen stumpfen Winkel zueinander einnehmen. Auch die Abschnitte der Abdeckungen können einen entsprechenden stumpfen Winkel zueinander einnehmen. Es ist vorteilhaft, wenn die Abdeckung eine relativ große Fläche hat, so dass das Smartphone mit einem gewissen Hebel gegen den Schaumstoff gedrückt wird.

In einer Ausführungsform ist in einem oberen Bereich des oberen Abschnitts mindestens eine Halterung für die drehbewegliche Lagerung der Abdeckung an der Smartphonehalterung vorgesehen. Des Weiteren kann in einem unteren Bereich des unteren Abschnitts eine Rasteinrichtung zur Fixierung der Abdeckung vorgesehen sein. Das Einlegen und Herausnehmen des Smartphones gestaltet sich bei dieser konstruktiven Ausbildung besonders einfach.

Weitere vorteilhafte Ausgestaltungen der Erfindung ergeben sich anhand der Unteransprüche.

Nachfolgend wird die Erfindung mittels mehrerer Ausführungsbeispiele beschrieben, die anhand von Abbildungen näher erläutert werden. Hierbei zeigen:

Fig. 1    eine Gesamtansicht eines erfindungsgemäßen elektrischen Motorrollers mit einer Lenkeinrichtung zur Steuerung des Motorrollers;

Fig. 2    eine Detailansicht des oberen Abschnitts der Lenkeinrichtung mit einer Anzeige zur Ausgabe von Informationen und einem Daumenhebel zur Vorgabe eines Fahrmodus;

Fig. 3    eine Übersicht der Fahrmodi mit zugehörigen Drehmomenten;

Fig. 4-6 verschiedene Bildschirmdarstellungen, die einen Verfügbarkeitszustand eines Hochleistungsbeschleunigungsmodus visualisieren;

Fig. 7 einzelne Komponenten des Motorrollers aus Fig. 1;

Fig. 8 eine Draufsicht einer in die Lenkeinrichtung gemäß Fig. 1 und 2 integrierten Smartphonehalterung;

Fig. 9 einen Querschnitt durch die Smartphonehalterung aus Fig. 8.

In der nachfolgenden Beschreibung werden für gleiche und gleichwirkende Teile dieselben Bezugsziffern verwendet.

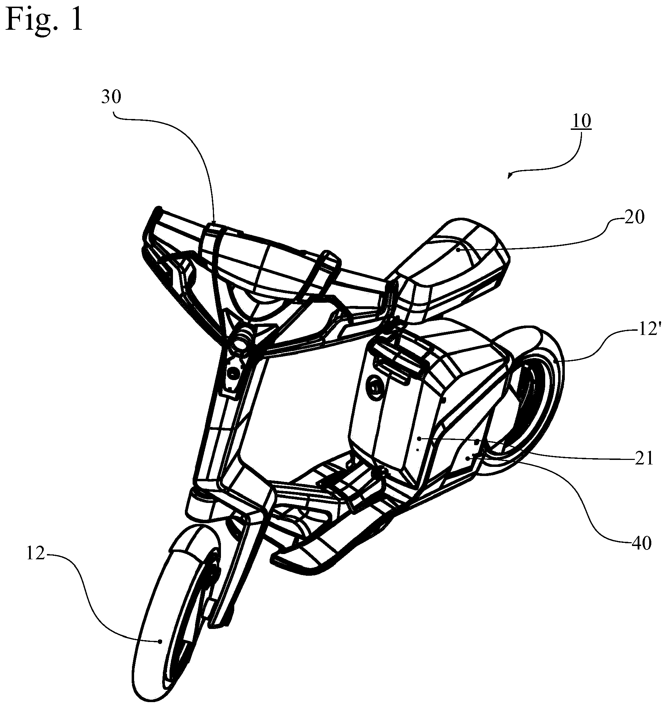

Fig. 1 zeigt die Gesamtansicht eines erfindungsgemäßen Rollers bzw. Motorrollers 10. Der Motorroller 10 hat eine Karosserie, an der ein Vorderrad 12 und ein Hinterrad 12' drehbeweglich befestigt ist. Des Weiteren umfasst die Karosserie eine Lenkeinrichtung 30, die ein Steuern des Motorrollers 10 ermöglicht. Am unteren Ende der Lenkeinrichtung 30 befindet sich das Vorderrad 12. Im rückwärtigen Teil der Karosserie befindet sich ein Batteriekasten 21, auf dem ein Sattel 20 befestigt ist.

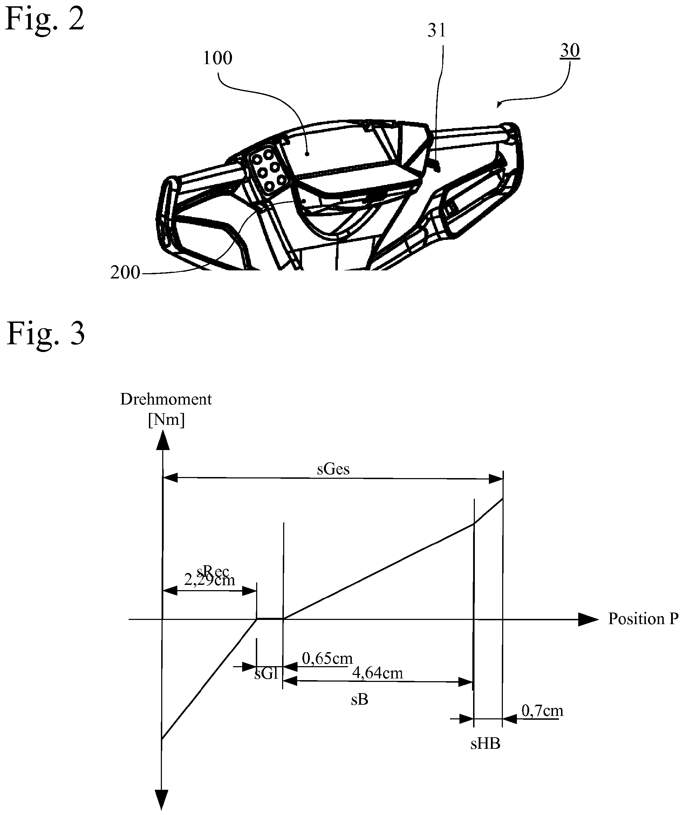

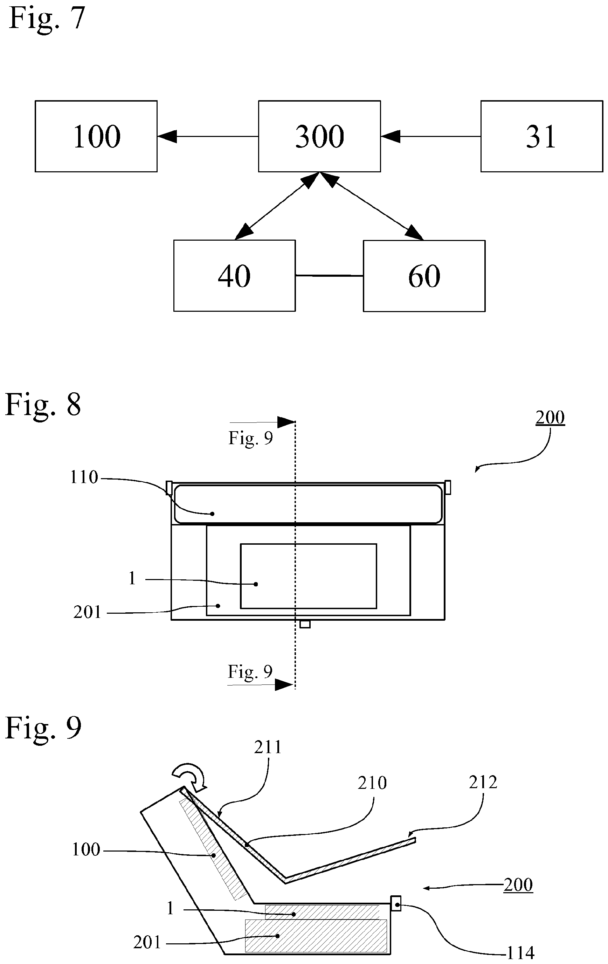

Die Lenkeinrichtung 30 ist in ihrem oberen Bereich T-förmig ausgebildet (vgl. Fig. 2), wobei links- und rechtsseitig der Lenksäule Griffbügel angeordnet sind, in die ein Bremshebel (linksseitig) und ein Daumenhebel 31 (rechtsseitig) hineinragen. Am Ende der Lenksäule im oberen Bereich der Lenkeinrichtung 30 befindet sich eine Smartphonehalterung 200, in die eine Anzeige 100 mit einem Bildschirm 110 (Fig. 8) integriert ist.

Eine wesentliche Komponente des Motorrollers 10 ist eine Steuerung 300 (Fig. 7), die in kommunikativer Verbindung mit dem Daumenhebel 31 sowie mit der Anzeige 100 steht. Der Daumenhebel 31 ist mit einer entsprechenden Sensorik ausgestattet, so dass dieser Signale über dessen Position relativ zu einer Ausgangsposition an die Steuerung 300 liefern kann. Die Steuerung 300 kann ihrerseits Signale ausgeben, die mittels der Anzeige 100 auf dem Bildschirm 110 angezeigt werden.

Die Steuerung 300 kommuniziert des Weiteren über ein Bussystem mit einer in dem Batteriekasten 71 integrierten Batterie 60 und mit einem Motor 40. Motor 40 und Batterie 60 stehen für das Antreiben des Motorrollers 10 zumindest in elektrischer Verbindung.

Die Steuerung 300 steuert das Verhalten des Motors 40 sowie der Batterie 60.

In einem erfindungsgemäßen Ausführungsbeispiel implementiert die Steuerung 300 vier sich unterscheidende Fahrmodi. Diese Fahrmodi umfassen die Folgenden:

    a) Rekuperationsmodus;
    b) Gleitmodus;
    c) Beschleunigungsmodus; und
    d) Hochleistungsbeschleunigungsmodus.

Die einzelnen Fahrmodi sind so implementiert, dass sie Drehmomente liefern, wie diese in Fig. 3 gezeigt sind.

Die Achsen des Graphen der Fig. 3 bezeichnen eine Position P des Daumenhebels 31 (x-Achse) und ein Drehmoment (y-Achse), das von dem Motor 40 aufgebracht wird.

Gemäß einer Ausführungsform befindet sich der Daumenhebel 31 an der Nullposition im Ruhezustand. Danach folgen Strecken für:

    a) den Rekuperationsmodus = sRec;
    b) Gleitmodus = sGl;
    c) Beschleunigungsmodus = sB;
    d) Hochleistungsbeschleunigungsmodus = sHB.

Befindet sich also der Daumenhebel 31 in der Ausgangsposition/Ruheposition, so durchläuft dieser zunächst die Strecke sREC für die Rekuperation, dann die Strecke für den Gleitmodus sGL, dann die Strecke für den Beschleunigungsmodus sB und abschließend die Strecke für den Hochleistungsbeschleunigungsmodus sHB. Die Strecken sind in dem gezeigten Ausführungsbeispiel folgendermaßen verteilt:

    ➢ sREC = 20 Prozent;
    ➢ sGl = 10 Prozent;
    ➢ sB = 65 Prozent;
    ➢ sHB = 10 Prozent

einer Betätigungsgesamtstrecke sGES.

Wenn der Motorroller 10 fährt, so wirkt im Gleitmodus kein Drehmoment, während im Rekuperationsmodus ein negatives Drehmoment wirkt, das mit zunehmendem Abstand zu dem Gleitmodus vorzugsweise linear zunimmt. Dementsprechend liegt im Beschleunigungsmodus ein positives Drehmoment an, der ebenfalls mit zunehmender Distanz zur Strecke für den Gleitmodus zunimmt. Vorzugsweise besteht eine lineare Abhängigkeit zwischen der Distanz und dem Drehmoment. Auch im Hochleistungsbeschleunigungsmodus liegt ein positives Drehmoment an, das linear mit zunehmender Distanz zu dem Beschleunigungsmodus zunimmt. Vorzugsweise ist der Beschleunigungsmodus und der Hochleistungsbeschleunigungsmodus derart umgesetzt, dass im Hochleistungsbeschleunigungsmodus eine deutlich stärkere Beschleunigung erfolgt.

Erfindungsgemäß kann die Steuerung 300 dazu ausgebildet sein, Signale abzugeben, die anzeigen, ob ein Hochleistungsbeschleunigungsmodus verfügbar ist. Die Verfügbarkeit des Hochleistungsbeschleunigungsmodus kann aufgrund eines niedrigen Ladezustands der Batterie 60 nicht gegeben sein. Auch können bei der Beurteilung, ob ein Hochleistungsbeschleunigungsmodus ohne die Beschädigung des Motorrollers 10 durchgeführt werden kann, Temperaturverhältnisse in oder an der Batterie 60 und/oder in oder am Motor 40 berücksichtigt werden. Erfindungsgemäß kann eines oder mehrere der genannten Kriterien verwendet werden, um die Verfügbarkeit zu bestimmen.

In dem beschriebenen Ausführungsbeispiel ist die Steuerung 300 derart ausgestaltet, dass sie die Verfügbarkeit eines Hochleistungsbeschleunigungsmodus davon abhängig macht, wann das letzte Mal ein entsprechender Hochleistungsbeschleunigungsmodus abgerufen und wie lang in Hochleistungsbeschleunigung gefahren wurde.

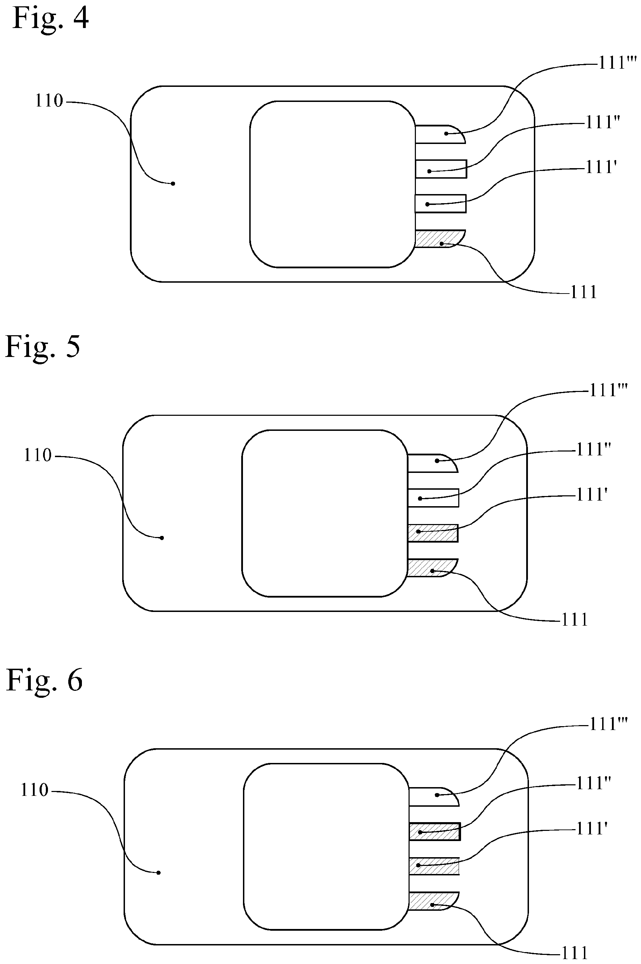

Des Weiteren gibt die Steuerung 300 Signale aus, die dem Benutzer bzw. Fahrer anzeigen, wie lange er mit der Hochleistungsbeschleunigung fahren kann. Diese Signale werden über die Anzeige 100 ausgegeben. Die Fig. 4 bis 6 zeigen den Bildschirm 110 der Anzeige 100 in unterschiedlichen Status. In jedem der dargestellten Status zeigt der Bildschirm 110 vier Ladebalken 111, 111', 111", 111'''. Entsprechend dem Zustand des Motorrollers 10, genauer gesagt der Verfügbarkeit des Hochleistungsbeschleunigungsmodus, sind die Ladebalken 111, 111', 111", 111''' gefüllt bzw. lediglich umrandet. Soweit alle Ladebalken 111, 111', 111", 111''' gefüllt sind, steht der Hochleistungsbeschleunigungsmodus für ein maximales Zeitintervall (= Maximalzeit), beispielsweise 1 Minute, zur Verfügung. Die Steuerung 300 steuert die Anzeige 100 so, dass bei einer kürzeren Verfügbarkeit die Ausgestaltung des Bildschirms 110 anders ist.

So ist in Fig. 4 lediglich der unterste Ladebalken 111 gefüllt. Die übrigen Ladebalken 111', 111", 111''' sind leer. Im Endeffekt zeigt die Steuerung 300 somit an, dass der Hochleistungsbeschleunigungsmodus lediglich für ein Viertel der Maximalzeit, beispielsweise 15 Sekunden, zur Verfügung steht.

In Fig. 5 ist der unterste Ladebalken 111 und der darüber liegende Ladebalken 111' gefüllt. Die übrigen Ladebalken 111" und 111''' sind leer, so dass die Steuerung 300 einen Zustand signalisiert, bei dem der Hochleistungsbeschleunigungsmodus für ein Zeitintervall zur Verfügung steht, das der Hälfte der Maximalzeit entspricht. Die Darstellung gemäß Fig. 5 kann also angeben, dass der Hochleistungsbeschleunigungsmodus für ca. 30 Sekunden zur Verfügung steht. In Fig. 6 sind drei Ladebalken 111, 111', 111" von den vier Ladebalken 111, 111', 111", 111''' gefüllt. Im Endeffekt bedeutet dies, dass der Hochleistungsbeschleunigungsmodus für Dreiviertel der Maximalzeit abgerufen werden kann.

Die Steuerung 300 ist in dieser Ausführungsform derart ausgebildet, dass sich die Verfügbarkeit des Hochleistungsbeschleunigungsmodus beim Fahren im Hochleistungsbeschleunigungsmodus langsam abbaut. Sobald beispielsweise die bereits oben genannte Maximalzeit erreicht ist, wird das verfügbare Drehmoment reduziert. Bei einem Fahren im normalen Beschleunigungsmodus oder im Rekuperationsmodus, oder im Gleitmodus, baut sich die Verfügbarkeit wieder auf, so dass nach einer gewissen Zeit das Einnehmen des Hochleistungsbeschleunigungsmodus wieder möglich ist.

Die Fig. 8 und 9 zeigen eine Detail-Ausgestaltung der Smartphonehalterung 200 aus Fig. 2. Die Smartphonehalterung 200 umfasst die Anzeige 100 mit dem Bildschirm 110 sowie einen Schaumstoffblock 201, auf dem ein Smartphone 1 abgelegt und fixiert werden kann.

Gemäß dem Querschnitt aus Fig. 9 hat die Smartphonehalterung 200 im Endeffekt zwei Schenkel, die stumpfwinklig zueinander stehen. In dem oberen Schenkel ist die Anzeige 100 und in den unteren Schenkel der Schaumstoffblock 201 integriert. Die Smartphonehalterung 200 umfasst eine drehbeweglich am Gehäuse der Smartphonehalterung 200 befestigte Abdeckung 210. Auch die Abdeckung umfasst einen oberen Abdeckungsabschnitt 211 und einen unteren Abdeckungsabschnitt 212, die im Endeffekt stumpfwinklig zueinander angeordnet sind. Die Abdeckung 210 ermöglicht ein Öffnen und Verschließen (= Verschlussstellung) der Smartphonehalterung 200. Die Abdeckung 210 ist in einer Ausführungsform aus einem durchsichtigen haltbaren Material ausgeführt, so dass der Bildschirm 110 der Anzeige 100 im geschlossenen Zustand bzw. in der Verschlussstellung abgelesen werden kann. Dementsprechend ermöglicht es die Abdeckung 110 auch, Darstellungen auf dem Smartphone 1 im geschlossenen Zustand zu erkennen. Der Schaumstoffblock 201 und das Gehäuse sowie die Abdeckung 210 der Smartphonehalterung sind derart ausgestaltet, dass im verschlossenen Zustand das Smartphone 1 zwischen dem unteren Abdeckungsabschnitt 212 und dem Schaumstoffblock 201 eingeklemmt ist. In diesem Zustand kann das Smartphone 1 also nicht verrutschen und ist sicher gehaltert. Eine Rasteinrichtung 214 stellt eine Rastverbindung zur Abdeckung 210 bereit, so dass die Abdeckung 210 im geschlossenen Zustand lösbar am Gehäuse gehalten ist.

Für den hier tätigen Fachmann erschließen sich zahlreiche weitere Ausgestaltungen der Erfindung. So wurde in der vorhergehenden Beschreibung eine Steuerung 300 beschrieben, die die Batterie 60 und den Motor 40 steuert.

Erfindungsgemäß kann die Steuerung 300 auch eine Regeleinrichtung sein, die einige der Funktionen regelt. Anmeldungsgemäß wird kein Unterschied zwischen einem Steuern und Regeln gemacht.

Die erfindungsgemäße Ausstattung des Motorrollers 10 kann auch derart erfolgen, dass dieser keine Smartphonehalterung 200 umfasst, wie diese in Verbindung mit den Fig. 8 und 9 beschrieben wurde. Theoretisch kann auf herkömmliche Anzeigen 100 zurückgegriffen werden, die dazu geeignet sind, Signale der Steuerung 300 anzuzeigen. Ebenso ist es denkbar, die erfindungsgemäße Smartphonehalterung 200 ohne die beschriebene Steuerung 300 einzusetzen.

Bezüglich der Smartphonehalterung 200 sei noch angemerkt, dass die Anordnung des Drehgelenks im oberen Bereich des Gehäuses der Smartphonehalterung 200 nicht zwingend notwendig ist. Beispielsweise kann der obere Abdeckungsabschnitt 211 fest mit dem Gehäuse verbunden sein und lediglich der untere Abdeckungsabschnitt 212 die bereits erläuterte drehbewegliche Verbindung aufweisen. Auch bei diesem Ausführungsbeispiel ist es möglich, das Smartphone 1 sicher zwischen dem Schaumstoffblock 201 und dem unteren Abdeckungsabschnitt 212 zu fixieren.

Auch sind die angegebenen Strecken für die einzelnen Fahrmodi rein exemplarisch zu verstehen. Erfindungsgemäß können diese Strecken beliebig variiert werden. Bevorzugte Variationen liegen jedoch innerhalb einer Variation von maximal 50, insbesondere maximal 30 Prozent der einzelnen Strecken.

Bezugszeichenliste

| | |
|---|---|
| 1 | Smartphone |
| 10 | Roller |
| 12 | Vorderrad |
| 12' | Hinterrad |
| 20 | Sattel |
| 21 | Batteriekasten |
| 30 | Lenkeinrichtung |
| 31 | Daumenhebel |
| 40 | Motor bzw. Antrieb |
| 60 | Batterie |
| 100 | Anzeige |
| 110 | Bildschirm |
| 111, 111', 111", 111''' | Ladebalken |
| 200 | Smartphonehalterung |
| 201 | Schaumstoffblock |
| 210 | Abdeckung |
| 211 | Oberer Abdeckungsabschnitt |
| 212 | Unterer Abdeckungsabschnitt |
| 214 | Rasteinrichtung |
| 300 | Steuerung |
| M | Drehmoment |
| P | Position des Daumenhebels |
| sGes | Betätigungsgesamtstrecke |
| sRec | Strecke für den Rekuperationsmodus |
| sGl | Strecke für den Gleitmodus |
| sB | Strecke für den Beschleunigungsmodus |
| sHB | Strecke für den Hochbeschleunigungsmodus |

**Patentansprüche**

1. Elektrischer Motorroller (10), umfassend:

      a. mindestens einen elektrischen Antrieb (40);
      b. mindestens eine elektrische Batterie (60);
      c. mindestens eine Betätigungseinheit, insbesondere einen Daumenhebel (31), wobei die Betätigungseinheit derart ausgebildet ist, dass die Betätigungseinheit entlang einer Betätigungsgesamtstrecke (sGes) in sich unterscheidende Positionen (P) bringbar ist;

d. eine Steuerung (300), die dazu ausgebildet ist,

◦ die Position (P) der Betätigungseinheit zu erfassen;

◦ in Abhängigkeit von der erfassten Position, aus einer Menge von Fahrmodi einen Fahrmodus auszuwählen und den ausgewählten Fahrmodus einzustellen, wobei die Fahrmodi umfassen:

a) Rekuperationsmodus;

b) Gleitmodus;

c) Beschleunigungsmodus,

wobei die Steuerung (300) beim Einstellen des Rekuperationsmodus den elektrischen Antrieb derart steuert, dass in dem elektrischen Antrieb (40) erzeugte Energie zumindest teilweise an die Batterie (60) abgegeben wird,

**dadurch gekennzeichnet, dass**

die Fahrmodi einen Hochleistungsbeschleunigungsmodus umfasst, wobei die Steuerung (300) Signale ausgibt, die angeben, ob sich der elektrische Antrieb (40) und/oder die Batterie (60) in einem Zustand befinden, in dem eine Hochleistungsbeschleunigung vorgenommen werden kann.

2. Elektrischer Motorroller (10) nach Anspruch 1,
**dadurch gekennzeichnet, dass**
die Steuerung (300) den elektrischen Antrieb (40) und/oder die Batterie (60) im Beschleunigungsmodus derart steuert, dass eine im Wesentlichen lineare Abhängigkeit gemäß einem ersten Beschleunigungskoeffizienten (k1) zwischen einer Position (P) der Betätigungseinheit und dem durch den elektrischen Antriebs (40) aufgebrachten Drehmoment (M) besteht, beispielsweise gemäß der folgenden Formel: $M(P)=k1*P+d$.

3. Elektrischer Motorroller (10) nach einem der vorhergehenden Ansprüche, **dadurch gekennzeichnet, dass**

die Fahrmodi einen Hochleistungsbeschleunigungsmodus umfasst, wobei die Steuerung (300) den Antrieb (40) und/oder die Batterie (60) im Hochleistungsbeschleunigungsmodus derart steuert, dass zumindest abschnittsweise eine im Wesentlichen lineare Abhängigkeit gemäß einem zweiten Beschleunigungskoeffizienten (k2) zwischen einer Position (P) der Betätigungseinheit und dem durch den elektrischen Antrieb aufgebrachten Drehmoment (M) besteht, beispielsweise gemäß der folgenden Formel:

$$M(P)=k2*P+d,$$

wobei der erste Beschleunigungskoeffizient (k1), insbesondere deutlich kleiner ist als der zweite Beschleunigungskoeffizient (k2), beispielsweise um mindestens 10 oder 20 oder 30 oder 50 Prozent.

4. Elektrischer Motorroller (10) nach einem der vorhergehenden Ansprüche, **dadurch gekennzeichnet, dass**
die Steuerung (300) dazu ausgebildet ist, bei einer Ermittlung, ob sich der elektrische Antrieb (40) und/oder die Batterie (60) in einem Zustand befinden, in dem eine/die Hochleistungsbeschleunigung vorgenommen werden kann, folgendes zu berücksichtigen:

a. Zeitraum seit einer letzten Hochleistungsbeschleunigung; und/oder

b. Dauer der letzten Hochleistungsbeschleunigung; und/oder

c. Temperaturwerte der Batterie (60) und/oder des Antriebs (40).

**Claims**

1. An electrical motor scooter (10), comprising:

a. at least one electrical drive (40);

b. at least one electrical battery (60);

c. at least one actuating unit, in particular a thumb lever (31), wherein the actuating unit is configured such that the actuating unit may be brought into different positions (P) along a total actuating distance (sGes);

d. a controller (300) which is configured to

- detect the position (P) of the actuating unit;
- depending on the detected position, to select one driving mode from a group of driving modes and to set the selected driving mode, wherein the driving modes comprise:

a) a recuperation mode;
b) a gliding mode;
c) an acceleration mode,

wherein the controller (300), during setting of the recuperation mode, controls the electrical drive such that electrical energy generated within the electrical drive (40) is emitted at least in part to the battery (60),
**characterized in that**
the driving mode comprises a high-performance acceleration mode, wherein the controller (300) issues signals indicating whether the electrical drive (40) and/or the battery (60) are in a state, in which high-performance acceleration can be performed.

2. The electrical motor scooter (10) according to claim 1,
**characterized in that**
the controller (300) controls the electrical drive (40) and/or the battery (60) in the acceleration mode such that there exists a substantially linear dependence according to a first acceleration coefficient (k1) between a position (P) of the actuating unit and the torque (M) produced by the electrical drive (40), for example according to the following formula: M(P) = k1 * P + d.

3. The electrical motor scooter (10) according to any one of the preceding claims,
**characterized in that**

the driving mode comprises a high-performance acceleration mode, wherein the controller (300) controls the drive (40) and/or the battery (60) in the high-performance acceleration mode such that there exists a substantially linear dependence at least in sections according to a second acceleration coefficient (k2) between a position (P) of the actuating unit and the torque (M) produced by the electrical drive, for example according to the following formula: M(P) = k2 * P + d,
wherein the first acceleration coefficient (k1) is in particular significantly smaller than the second acceleration coefficient (k2), for example by at least 10 or 20 or 30 or 50 percent.

4. The electrical motor scooter (10) according to any one of the preceding claims,
**characterized in that**
the controller (300), when determining whether the electrical drive (40) and/or the battery (60) are in a state in which a/the high-performance acceleration can be performed, is configured to take into account:

a. the period of time since the last high-performance acceleration; and/or
b. the duration of the last high-performance acceleration; and/or
c. temperature values of the battery (60) and/or of the drive (40).

**Revendications**

1. Scooter électrique (10), comprenant :

a. au moins un entraînement électrique (40) ;
b. au moins une batterie électrique (60) ;
c. au moins une unité d'actionnement, en particulier un levier à pouce (31), sachant que l'unité d'actionnement est constituée de telle manière que l'unité d'actionnement puisse être mise dans des positions (P) qui diffèrent les unes des autres le long d'une course totale d'actionnement (sGes) ;
d. une commande (300) qui est constituée pour

◦ saisir la position (P) de l'unité d'actionnement ;
◦ en fonction de la position saisie, sélectionner un mode de marche parmi une pluralité de modes de marche et enclencher le mode de marche sélectionné, sachant que les modes de marche comprennent :

a) un mode de récupération ;
b) un mode de glissement ;
c) un mode d'accélération ;

sachant qu'en cas d'enclenchement du mode de récupération, la commande (300) commande l'entraînement électrique de telle manière que de l'énergie générée dans l'entraînement électrique (40) soit délivrée au moins en partie à la batterie (60), **caractérisé en ce que**
les modes de marche comprennent un mode d'accélération haute puissance, sachant que la commande (300) émet des signaux qui indiquent si l'entraînement électrique (40) et/ou la batterie (60) se trouvent dans un état dans lequel une accélération haute puissance peut être effectuée.

2. Scooter électrique (10) selon la revendication 1,
**caractérisé en ce que**
dans le mode d'accélération, la commande (300) commande l'entraînement électrique (40) et/ou la batterie (60) de telle manière qu'il existe une dépendance sensiblement linéaire suivant un premier coefficient d'accélération (k1) entre une position (P) de l'unité d'actionnement et le couple (M) exercé par l'entraînement électrique (40), par exemple suivant la formule suivante : $M(P) = k1 * P + d$.

3. Scooter électrique (10) selon l'une des revendications précédentes,
**caractérisé en ce que**

les modes de marche comprennent un mode d'accélération haute puissance, sachant que dans le mode d'accélération haute puissance, la commande (300) commande l'entraînement (40) et/ou la batterie (60) de telle manière qu'il existe, au moins par sections, une dépendance sensiblement linéaire suivant un deuxième coefficient d'accélération (k2) entre une position (P) de l'unité d'actionnement et le couple (M) exercé par l'entraînement électrique (40), par exemple suivant la formule suivante : $M(P) = k2 * P + d$,
sachant que le premier coefficient d'accélération (k1) est en particulier nettement inférieur au deuxième coefficient d'accélération (k2), par exemple d'au moins 10 ou 20 ou 30 ou 50 pour cent.

4. Scooter électrique (10) selon l'une des revendications précédentes,
**caractérisé en ce que**
la commande (300) est constituée pour prendre en compte ce qui suit lors d'une opération visant à déterminer si l'entraînement électrique (40) et/ou la batterie (60) se trouvent dans un état dans lequel une/l'accélération haute puissance peut être effectuée :

a. la période de temps écoulée depuis la dernière accélération haute puissance ; et/ou
b. la durée de la dernière accélération haute puissance ; et/ou
c. valeurs de température de la batterie (60) et/ou de l'entraînement (40).

Fig. 1

# Fig. 2

# Fig. 3

Fig. 4

110 — 

111'''
111''
111'
111

Fig. 5

110 —

111'''
111''
111'
111

Fig. 6

110 —

111'''
111''
111'
111

## Fig. 7

```
┌──────────┐      ┌──────────┐      ┌──────────┐
│   100    │ ◄─── │   300    │ ◄─── │    31    │
└──────────┘      └──────────┘      └──────────┘
                    ▲     ▲
                  ╱         ╲
                 ▼           ▼
          ┌──────────┐  ┌──────────┐
          │    40    │──│    60    │
          └──────────┘  └──────────┘
```

## Fig. 8

## Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1857314 A2